# EUROPEAN PATENT SPECIFICATION

(11) **EP 2 599 839 B1**
(45) Date of publication and mention of the grant of the patent: **08.07.2015**
(21) Application number: 11191629.2
(22) Date of filing: 01.12.2011
(51) Int. Cl.: C09D 5/00

(54) **MINERAL WOOL SUBSTRATE**
MINERALWOLLESUBSTRAT
SUBSTRAT DE LAINE MINÉRALE

(43) Date of publication of application: 05.06.2013
(73) Proprietor: Rockwool International A/S, 2640 Hedehusene (DK)
(72) Inventor: Mertens, William, 5654 SR Eindhoven (NL); Rasmussen, Jesper Rene, 4000 Roskilde (DK); Foldschack, Mathilde Rosendahl, 3540 Lynge (DK)
(74) Representative: Jones, Helen M.M.

(56) References cited:
- WO-A1-2009/074570
- WO-A1-2010/099520
- DE-A1- 2 453 658
- DE-A1- 2 808 684
- US-B1- 6 245 842
- US-B1- 6 749 920

## Description

The invention relates to a mineral wool substrate comprising at least one coated surface, wherein a cured/dried composition has been applied to the at least one surface and the cured/dried composition comprises fibres and a binder. The invention further relates to a method of coating the mineral wool substrate and a composite structure comprising the mineral wool substrate.

Compositions for coating porous substrates, such as those made of mineral wool, face different challenges to those used on surfaces such as metals, plastics and other densely packed or impermeable materials. The main issue with porous substrates is that it is difficult to obtain sufficient coverage of the surface when the composition is directly applied onto the substrate. This may be attributed to the low viscosity of the coating composition and/or the slow drying/curing time, which results in the composition being soaked into the substrate before a coating film can be formed. Furthermore, for a composition which is to be applied directly onto the substrate, the composition should be sufficiently permeable to water vapour diffusion, prevent crack formation and allow for any expansion or shrinkage.

One method for dealing with coating of porous substrates has involved the use of UV-curable lacquer to provide an impermeable coating film, before the application of the paint. Another has involved the provision of a fleece, to form a barrier between the porous substrate and the subsequent coating layers. However, neither method involves the direct application of the coating onto the substrate.

Furthermore, previous methods involving direct application of the coating has required the use of many layers of coatings in order to provide coverage to an acceptable level. Therefore these methods have also failed to adequately address the problems associated with coating of porous substrates.

In European Coatings Journal, 1-2/2006, pages 30-33, there is described an acrylic paint composition comprising mineral fibres for use as a coating for concrete surfaces (approx. density from 1750 to 2400 kg/m³). The paint composition is used to bridge gaps that exist on rough concrete surfaces and to enhance crack resistance. Concrete is a densely packed material, and therefore if the composition was to be used on a more porous substrate, the paint could simply be soaked into the porous material, rather than providing effective coverage.

US2011/0061568 further describes an alkyl silicate paint composition comprising inorganic fibres, with improved crack resistance. However this document also fails to address the problems associated with coatings on porous substrates, such as mineral wool substrates.

WO2012099520 discloses heat-resistant non-skid coatings which may contain mineral fibre. The coatings are applied to air-craft carrier flight decks, i.e. steel panels.

US6749920 discloses a coating for mineral fibre board ceiling tiles or wall panels. The coating may contain fillers as well as paint binders. Suitable fillers are hollow beads.

US6245842 discloses intumescent coatings comprising binder, a blowing agent, and an intumescent compound. The coating may contain fibre reinforcement for instance formed of mineral fibre. The intumescent coatings are used to treat wood based building products.

DE2808684 discloses screeding compositions used to provide heat insulation and sound proofing of walls and ceilings.

DE2453658 discloses coatings containing binder and asbestos. The coatings are applied to porous materials, such as porous carbon foam.

Accordingly, the invention provides mineral wool substrate comprising at least one coated surface, wherein a cured/dried composition has been applied to the at least one surface and the cured/dried composition is a cured/dried paint composition, that comprises fibres and a binder, wherein said fibres are man-made vitreous fibres selected from the group of glass fibres, rock fibres, stone fibres, slag fibres or ceramic fibres or any combination thereof.

In a further aspect, the invention provides a method of coating the mineral wool substrate comprising the steps of: applying a paint composition comprising fibres that are man-made vitreous fibres selected from the group of glass fibres, rock fibres, stone fibres, slag fibres or ceramic fibres or any combination thereof, binder and a liquid vehicle to at least one surface of the mineral wool substrate; and curing/drying the paint composition.

According to the invention, the composition is applied to at least part of the at least one surface of the mineral wool substrate.

### Fibres

Mineral fibres are especially preferred and include both crystalline materials as well as amorphous materials formed by a melting process. Examples of inorganic fibres are carbide fibres, such as silicon carbide fibres, boron carbide fibres, niobium carbide fibres; nitride fibres, such as silicon nitride fibres; boron containing fibres, such as boron fibres, boride fibres; silicon-containing fibres, such as silicon fibres, alumina-boron-silica fibres, E-glass (non-alkaline alumoborosilicate) fibres, C-glass (non-alkaline or low-alkaline soda lime-alumoborosilicate) fibres, A-glass (alkaline soda lime-silicate) fibres, S-glass fibres, CEMFIL-glass fibres, ARG-glass fibres, mineral-glass fibres, non-alkaline magnesia alumosilicate fibres, quartz fibres, silicic acid fibres, silica fibres, high-silica fibres, alumina high-silica fibres, alumosilicate fibres, aluminium silicate fibres, magnesia alumosilicate fibres, soda borosilicate fibres, soda silicate fibres, polycarbosilane fibres, polytitanocarbosilane fibres, polysilazane fibres, hydridopolysilazane fibres, tobermorite fibres, samarium silicate fibres, wollastonite fibres, potassium aluminium silicate fibres, ceramic fibres, slag wool fibres, charcoal fibres; rock wool fibres (also know as stone fibres), basalt fibres; processed mineral fibres from mineral wool; attapulgite fibres; etc.; modified by any chemical or physical processes; and any mixture thereof.

Particularly preferred examples of such fibres are glass wool fibres, rock wool fibres; processed mineral fibres from mineral wool; wollastonite fibres; tobermorite fibres; attapulgite fibres.

In general, rock wool fibres have content by weight of oxides as follows:
SiO₂ 25 to 50%, preferably 38 to 48%
Al₂O₃ 4 to 30%, preferably 15 to 28%
TiO₂ up to 6%
Fe₂O₃ 2 to 15%
CaO 5 to 30%, preferably 5 to 18%
MgO up to 20% preferably 1 to 8%
Na₂O up to 15%
K₂O up to 15%

A preferred fibre useful in the invention, has oxide contents by weight in the following ranges:
SiO₂ 37 to 42%
Al₂O₃ 18 to 23%
CaO + MgO 34 to 39%
Fe₂O₃ up to 1%
Na₂O + K₂O up to 3%

Examples of commercially available mineral fibres according to the invention are CoatForce® CF10, ex. Lapinus Fibres (The Netherlands), CoatForce® CF30, ex. Lapinus Fibres BV (The Netherlands), CoatForce® CF50, ex. Lapinus Fibres BV (The Netherlands), Rockforce® MS603-Roxul®1000, ex. Lapinus Fibres BV (The Netherlands), and Rockforce® MS610-Roxul®1000, ex. Lapinus Fibres BV (The Netherlands).

Other fibres may be Vitrostrand 1304 and 1320 K, PMF® 204 (Isolatek), Perlwolle (Isola Mineralwolle), Thermafiber FRF (Thermafiber).

Preferably there is less than 20% by weight based on the total fibre weight, of shot present with the mineral fibres in the composition. Most preferably there is less than 5% by weight of shot, most preferably less than 2% by weight of shot present in the resulting mineral fibres, and even more preferably less than 0.5% by weight of shot present in the mineral fibres. Shot is solid charge with a particle diameter of greater than 63 µm. The reduction in the amount of shot present in the resulting mineral fibres means that a greater percentage of the melt has been fiberised. Additionally the resulting product has less shot present which therefore results in a high quality product.

The fibres present in the composition can be produced by standard methods such as with a cascade spinner or a spinning cup. However, in order to achieve the required length distribution of the fibres, it will usually be necessary for the fibres to be processed further after the standard production.

Usually, the fibres according to the invention have an average diameter of from 2 to 50 µm, preferably from 2 to 25 µm and even more preferably from 2 to 10 µm. In another preferred embodiment, the fibres have an average diameter of from 5 to 6 µm. According to the present invention, the average fibre diameter is determined for a representative sample by measuring the diameter of at least 200 individual fibres by means of the intercept method and scanning electron microscope or optical microscope (1000x magnification).

The fibres used in the present invention may have a length of from 100 to 750 µm, preferably from 100 to 500 µm, more preferably from 100 to 300 µm and even more preferably from 100 to 200 µm. The shorter length fibres are favoured in order to provide better dispersion within the composition and further to have minimal impact on the composition viscosity. In a preferred embodiment, the shorter fibres may be unbranched to allow easier incorporation into the composition, as well as to ensure uniform distribution.

The fibres may have an aspect ratio ranging from 10:1 to 150:1, preferably from 20:1 to 75:1 and even more preferably from 20:1 to 50:1. Aspect ratio as used herein refers to the ratio of the fibre length to diameter. The aspect ratio of the fibres may be relevant when choosing the application method of the composition. The fibres with lower aspect ratio (e.g. 20:1) are preferred for spray applications, whereas the fibres with higher aspect ratio may be used for applications by roller or brush. It is believed that a composition comprising fibres with an aspect ratio within this range greatly improves the cohesive reinforcement of the resulting coating films.

Furthermore, fibres with higher aspect ratio will contribute more to the mechanical properties of a composition than those with a lower value. Therefore this should be considered when choosing the specific properties required from the composition.

The fibres according to the invention may have an oil absorption value of from 20-65 g/100g, preferably 20-50 g/100g and even more preferably 20-40 g/100g. In order to determine the oil absorption of fibrous materials, all fibres should be dispersed properly.

The fibres may further have a specific density of from 300 to 4000 kg/m³, preferably from 1000 to 3500 kg/m³, and even more preferably from 1500 to 3500 kg/m³_{.}

In some circumstances, it is advantageous, before mixing the fibres into the composition, to treat the fibres with a surfactant, usually a cationic surfactant. The surfactant could, alternatively, be added to the composition as a separate component. The presence of a surfactant, in particular a cationic surfactant, in the composition has been found to provide easier mixing and, therefore, a more homogeneous distribution of fibres within the composition.

The surface of the fibres may or may not have been modified (surface treated) by chemical or physical processes. Examples of such modification processes used to improve the beneficial effects of the fibres are carbonisation; silylation; surface oxidation; etching such as treatment with alkali metal hydroxide, treatment with hydrofluoric acid; coating; poly electrolytic entrapment in the porous surface structures; adsorption processes; hydrogen-bonding processes; cationic bonding processes; esterification; anionic bonding processes; etc. as well as any modification processes included in the manufacturing of the fibres.

In a preferred embodiment, the fibres are biodegradable under physiological conditions, especially in the respiratory organs (the lungs) of mammals, especially humans. The degree of biodegradability should preferably be at least 20 nm/day, such as at least 30 nm/day, in particular at least 50 nm/day when tested as described in WO 96/14454. Examples of suitable biodegradable fibres are the ones described in WO 96/14454 and WO 96/14274. A specific example thereof is the commercially available Rockforce® MS603-Roxul®1000, ex. Lapinus Fibres BV (The Netherlands).

### Coating method

A further aspect of the invention relates to a method of coating a mineral wool substrate.

The coating composition for use in the method may be any composition which is compatible for use on a mineral wool substrate. The composition therefore would preferably have a relatively fast drying or curing time. In addition, it would be preferable to use a composition which is sufficiently low in viscosity for coating using convenient techniques, whilst at the same time, preventing the composition from being absorbed by the mineral wool substrate. Furthermore the dried/cured coating should have sufficient permeability to water vapour diffusion and allow for any expansion or shrinkage, in order to permit the substrate to breathe.

In one embodiment, the drying/curing time of the composition is from 1 to 100 hours, more preferably between 1 to 48 hours, and even more preferably between 1 to 8 hours.

The drying time may be measured by any method known to those skilled in the art. In one embodiment, the weight loss of the coated sample may be measured against time. The coating can be considered to be dry when the weight no longer changes. In a further method, a touch-dry approach could be utilised wherein the coating can be considered to be dry if touching the coating no longer leaves any marks in the coating. In yet another method, the dry-to-handle approach may be used wherein the coated sample is considered to be dry when it can be handled without damaging the coating.

In a further method of determining the drying time of the composition, the dry time may be measured according to ASTM D5895-03 (2008), in which a coating may be applied on a metal substrate over a certain length. A slow moving needle is then positioned on the beginning of the substrate. As the needles moves forward, it initially leaves no marks, whilst the coating is wet, and then later forms a mark when the coating is drying. When the coating is completely dried, the needle will simply move over the surface, leaving no further marks.

The curing time of the composition may be measured by any method known to those skilled in the art. In one test method, the Koenig Hardness of the coating may be measured. When this value no longer changes in time, the coating can be considered to be fully cured.

The drying/curing time may be measured at any suitable temperature. In a preferred test method, the drying/curing time is measured at a temperature between 20 and 30 °C, and at relative humidity of 45 to 60%.

The composition further requires the presence of a binder. A binder as used herein encompasses resins having film forming characteristics, serving to bind all of components of the composition together in the dried/cured film. Examples of suitable binders are resins given in BASF Handbook on Basics of Coating Technology. In embodiments, the binder may be aqueous-based acrylic, aqueous-based vinyl acetate ethylene copolymer or an epoxy-resin based.

The composition is a paint, preferably a paint which is conventionally used on wood surfaces. A paint as used herein has the conventional meaning and may comprise constituents which will be apparent for the person skilled in the art. Examples of such paint constituents are pigments, fillers, additives e.g. thickening agents, wetting agents, suspending agents, anti-sag agents, anti-sediment agents, stabilizers, coalescing agents, and thixothropic agents.

The composition comprises one or more liquid vehicles. Examples of liquid vehicles includes solvents such as water, alcohols such as methanol, ethanol, propanol, isopropanol, butanol, isobutanol and benzyl alcohol; alcohol/water mixtures such as ethanol/water mixtures; aliphatic, cycloaliphatic and aromatic hydrocarbons such as white spirit, cyclohexane, toluene, xylene and naphtha solvent; ketones such as methyl ethyl ketone, acetone, methyl isobutyl ketone, methyl isoamyl ketone, diacetone alcohol and cyclohexanone; ether alcohols such as 1-methoxy-2-propanol, 2-butoxyethanol and butyl diglycol; esters such as methoxypropyl acetate, n-butyl acetate and 2-ethoxyethyl acetate; and mixtures thereof.

The concentration of the fibres in the liquid composition is normally in the range of 0.1-30%, such as 1-25% or 2-30%, e.g. 2-20% or 5-25%, or 3-18%, or 4-12%, preferably 5-10%, by solids weight of the composition.

The concentration of the fibres in the dried/cured composition is normally in the range of 1-50%, preferably 5-30% and even more preferably 10-25%, by solids weight of the dried/cured composition.

It should be understood that the above ranges refer to the total amount of fibres, thus, in the case where two or more fibre types are utilised, the combined amounts should fall within the above ranges.

The composition according to the present invention may be prepared by any method known to those skilled in the art.

In an embodiment, the fibres may be added to the composition, together with the other constituents which make up the composition, before or after the milling process. If the fibres are added before the milling process, it can be expected that the average length of the fibres may be somewhat reduced during the manufacturing process of the composition process, e.g. due to the applied shear forces. It is believed that the paint manufacturing process should preferably be performed so that the fibres in the ready-to-use paint have an average length corresponding to at least 75% of the pre-manufacture average length.

If the composition is to be applied to a multilayer system, it may be applied as any of said layers. As such, the composition may be used as a base coat, i.e. the first coating layer, one or more intermediate coat(s) or the top coat. In a preferred embodiment, the composition is used as a base coat.

The application method of the composition onto a mineral wool substrate is not particularly limited. Therefore the composition may be applied by a spray, roller, brush, curtain, sponge or soft sponge roll.

### Mineral wool substrate

The substrate according to the invention may be any mineral wool substrate. In a preferred embodiment, the substrate is made out of rock wool.

In a further aspect of the invention, the substrate is a mineral wool insulation product, preferably a thermal or acoustic insulation product. In yet another embodiment, the substrate may be a mineral wool cladding product.

The density of the substrate may be from 100 to 1500 kg/m³. Some products to which the coating may be applied, for example acoustic ceiling tiles, comprise a mineral wool substrate with a density of preferably from 80 to 250 kg/m³. Other products, for example insulation elements comprise a mineral wool substrate with a density of preferably from 400 to 600 kg/m³. Yet other products, for example facade tiles comprise a mineral wool substrate with a density of preferably from 900 to 1200 kg/m³

There is no particular limitation regarding the methods by which the mineral wool substrates may be formed. In one embodiment, the substrate may be prepared by adding a melt of stone or glass to the surface of a spinning wheel or to a spinning cup with fine holes. The spinning process will create mineral wool fibres which are blown away from the spinner and mixed with droplets of an uncured wool binder. This mixture is transported by air to a conveyer belt. The wool fibres will deposit to the moving belt building up a layer of wool fibres, i.e. forming a wool fibre web.

The wool fibre web may be processed in different ways, e.g. compression in either the direction of the movement of the conveyer belt or in the height direction perpendicular to the belt and the major surface of the wool fibre web, depending on the properties needed in the final product. After such processing the wool fibre web enters the curing oven in which the wool binder is cured. This will give the mineral wool product the necessary strength and ensures that the fibrous material will not disintegrate.

Another way of forming a substrate comprises providing mineral wool fibres in the form of a collected web, providing a wool binder, subjecting the collected web of wool fibres to a disentanglement process, suspending the wool fibres in a primary air flow, mixing the wool binder with the mineral wool fibres before, during or after the disentanglement process to form a mixture of mineral wool fibres and wool binder, collecting the mixture of mineral wool fibres and wool binder and pressing and curing the mixture to provide a consolidated composite. Such a process are referred to in for example WO2011012712.

The substrate preferably comprises between 40-98%, preferably 50-90% by volume, of air or unfilled space. Some products have between 90-98%, by volume of air or unfilled space. Other products have between 75-90%, by volume of air or unfilled space. Yet other products have between 55-70%, by volume of air or unfilled space.

The substrate is preferably a mineral wool fibre-containing element comprising a mineral wool fibre content in an amount of 75 to 95 wt % of the total weight of starting materials, and a wool binder in an amount of 5 to 20 wt % of the total weight of starting materials.

### Composite structure

In one embodiment, the mineral wool substrate may be part of a composite structure. In a preferred embodiment, the composite structure comprises a plurality of wooden members having the mineral wool substrate there between. In a preferred embodiment, the wooden members are coated with the same cured/dried composition as the mineral wool substrate.

In a preferred embodiment of the invention, two wooden members are provided on each side of the wool substrate and optionally a wooden cover member is provided straddling said wooden members and the wool substrate. Moreover, the two wooden members may be either equal in width whereby the wool substrate is centrally provided in the structure or be different in width whereby the wool substrate is non-symmetrically provided in the composite structure.

It is preferred that the surface on which the composition is to be applied on the wool substrate is placed between 0.2 to 2 mm, preferably 0.2 to 1 mm, and even more preferably between 0.2 to 0.5 mm lower, relative to the two adjacent wood substrates.

The wool substrate may constitute 10 to 50% of the width of the composite structure. The wool substrate may further constitute 50 to 95% of the height of the composite structure.

The wool substrate may be formed by subjecting the collected web of wool fibres to a disentanglement process, suspending the wool fibres in a primary air flow, and mixing the wool binder with the mineral wool fibres before, during or after the disentanglement process to form a mixture of mineral wool fibres and wool binder, and then collecting the mixture of mineral wool fibres and wool binder and pressing and curing the mixture to provide a consolidated composite with a density of from 300 kg/m³ to 1000 kg/ m³, such as 400 kg/ m³ to 800 kg/ m³, for example 400-600 kg/m³, more preferably approx. 500 kg/ m³.

The amount of wool binder is chosen on the basis of desired cohesion, strength and cost, plus properties such as thermal insulation value. The low limit of 5 wt % results in a composite with a lower strength and cohesion, which is however adequate for some applications, and has the benefit of relatively low cost and potential for good thermal and acoustic insulation properties. In applications where a high mechanical strength is needed, a higher amount of binder should be used, such as up to the upper limit of 20 wt %, but this will increase the cost of the resulting product. For a majority of applications, a suitable composition will include a wool binder amount from 5 to 20 wt % or from 8 to 17 wt %. Most usually, a suitable quantity of wool binder will be from 10 to 15 wt %.

This mineral wool fibre substrate defined above is a versatile and cost efficiently manufactured mineral wool fibre-containing composite. By adjusting the density to which the element is pressed, a variety of different wool substrates can be made that are tailor-made for specific purposes.

By subjecting the mineral wool fibres to a wool fibre disentanglement process, compacted mineral fibres are opened up and the mineral wool fibres and wool binder are more evenly distributed in the substrate produced. This increased homogeneity in the wool substrate results generally in an increased level of mechanical strength relative to other mineral wool insulation products. The even distribution of wool fibres and wool binder in the element also has a desirable effect on the acoustic insulation properties of the wool substrate.

This mineral wool fibre substrate is advantageous in applications where mechanical stability and an even surface finish as well as insulating properties are important. Preferably the thickness of the wool substrate is from 4 to 25 mm. In some embodiments, the thickness of the wool substrate is preferably from 12 to 25 mm, more preferably from 15 to 23 mm and most preferably from 18 to 21 mm, depending on the size of the composite structure and the amount of insulation which is to be encompassed in the window frame profile.

The wooden members may be laminated to the mineral wool component in their longitudinal direction in any suitable manner. Moreover, the wooden members and the wool substrate are preferably glued together.

In one embodiment, one or more wool substrates may be provided within one composite structure. In such an embodiment, the wool substrate may be provided adjacent to each other.

In a further preferred embodiment of the composite, the difference in colour between the composite substrate and the wooden members should not be noticeable. When the same composition is applied onto two different types of composite substrates, the colour difference can be measured according to the test as shown in Example 1.

In a preferred embodiment, the composite structure is a window frame. When the wool substrate is used as part of a window frame, the wool substrate improves the insulation properties of the frame.

### Examples of the Present Invention

The following examples of the present invention are merely exemplary and should not be viewed as limiting the scope of the invention.

### EXAMPLE 1

### 1.1 Experimental Set-up

The following mixtures were prepared:

| | **Paint** | **Fibres** | **Total** | **[Fibres]** |
|---|---|---|---|---|
| | [g] | [g] | [g] | [%] |
| Sample 1 | 100.0 | 0.0 | 100.0 | 0 |
| Sample 2 | 100.0 | 2.5 | 102.5 | 2.4 |
| Sample 3 | 100.0 | 5.0 | 105.0 | 4.8 |
| Sample 4 | 100.0 | 10.0 | 110.0 | 9.1 |
| Sample 5 | 100.0 | 15.0 | 115.0 | 13.0 |

The percentages stated are in weight percent of the total paint. In all cases, the fibres (Coatforce® CF10) were mixed in using a high speed dissolver. The speed was kept constant at 2000 RPM for 15 minutes in case of samples 2 to 4. In case of sample 5, the speed was set to 2750 RPM for 15 minutes in order to make sure that the fibres were incorporated properly.

Each coating was applied on the substrate using a bird applicator.

The substrate is a laminate between pine wood and mineral wool. The pine wood density is >500 kg/m3 and the moisture content is 12%. At least 90% of the wood is heartwood. The mineral wool has a density of 500 kg/m3 has been produced with a process according to WO2011012712. A Melamine-UreaFormaldehyde glue is used for gluing the pine wood and mineral wool into a laminate.

The applied wet film thickness was 100 µm. The final coatings were judged visually and the colour of both the coated wool and the coated wood were measured using the CIE-lab colour space. In the CIE-lab colour space, the colour can be represented as a set of values. This set consists of:

| | | |
|---|---|---|
| L | L = 0 | → black |
| | L = 100 | → white |
| a* | -a* | = green |
| | +a* | = red |
| b* | -b* | = blue |
| | +b* | = yellow |

The viscosity of the liquid paints was determined using a Brookfield viscometer in combination with cone 7.

### 1.2 Results and Discussion

### 2.1 Paint preparation

The paint was checked to ensure that the fibres were dispersed properly. This was carried out visually by placing a droplet of liquid paint between two class plates. The presence of any lumps of fibres then becomes apparent. Since no lumps of fibres were observed, there appeared to be no issues with the preparation of the paint samples.

### 2.2. Viscosity measurement

The results of the viscosity measurement can be found in *Graph 1*:

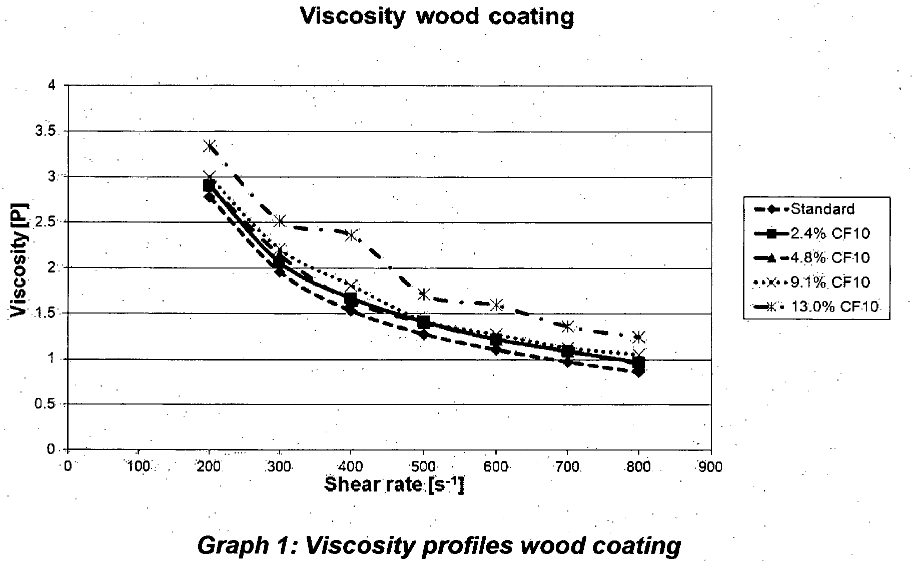

Including fibres leads to a slight increase in viscosity, but up to 9.1 % this increase is relatively small. Adding 13.0 % CoatForce® CF10 leads to an increase in viscosity. The value at 400 s⁻¹ for the composition comprising 13.0% CoatForce® CF10 is believed to be a measurement error, caused by the presence of a relatively large amount of fibres.

### 2.3. Colour (visual determination)

Pictures of all the samples are shown in *Picture 1* to *Picture 6*. The presence of fibres in the formulation has a positive effect in preventing the paint being absorbed into the wool. Because the viscosity of all the paints is relatively comparable, the effect is assumed to be ascribed to the presence of fibres in the formulation and not to an increase in viscosity.

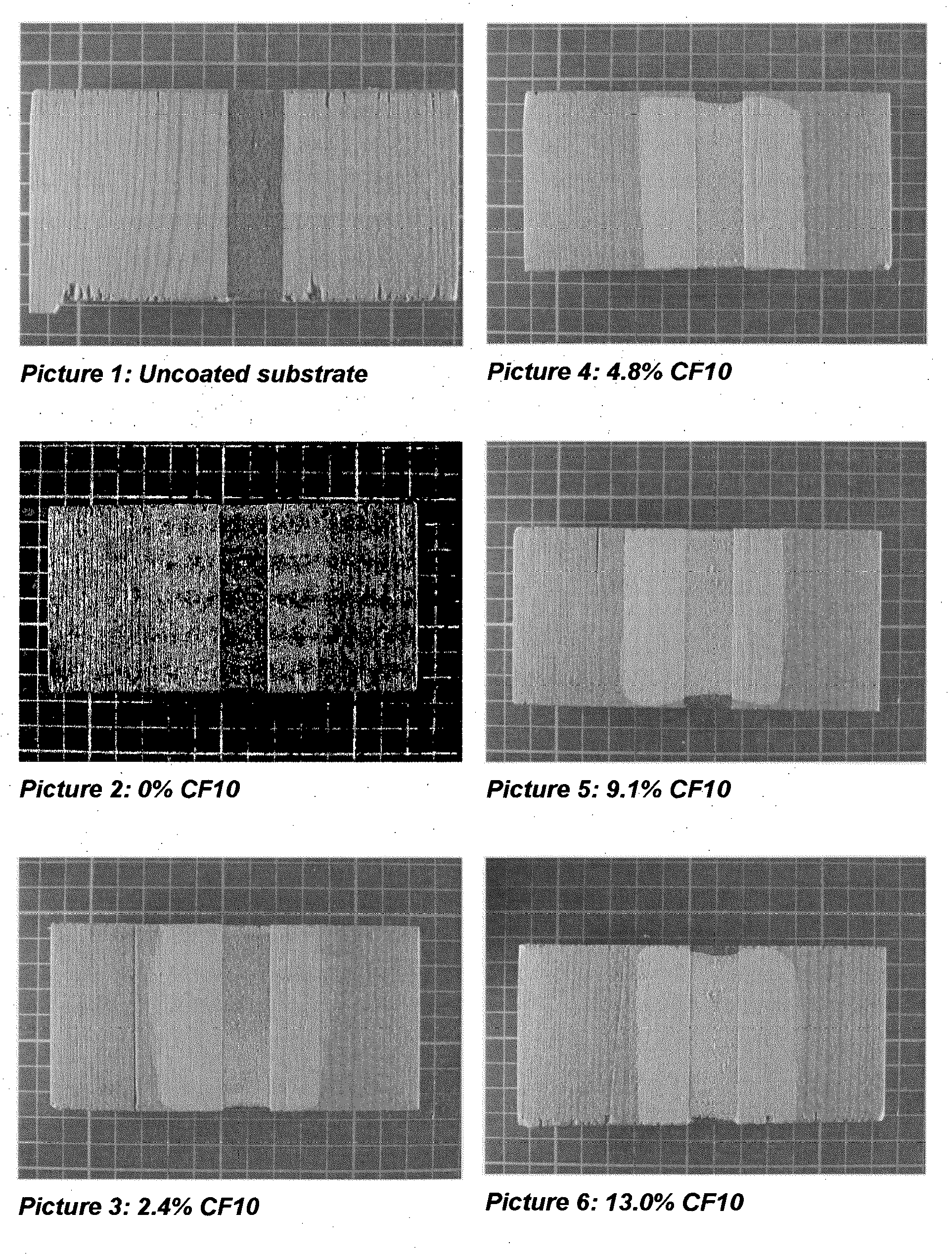

### 2.4. Colour (CIE-lab colour space)

*Graph 2*, *Graph 3* and *Graph 4* show the values for L, a* and b*, measured on both wood and wool.

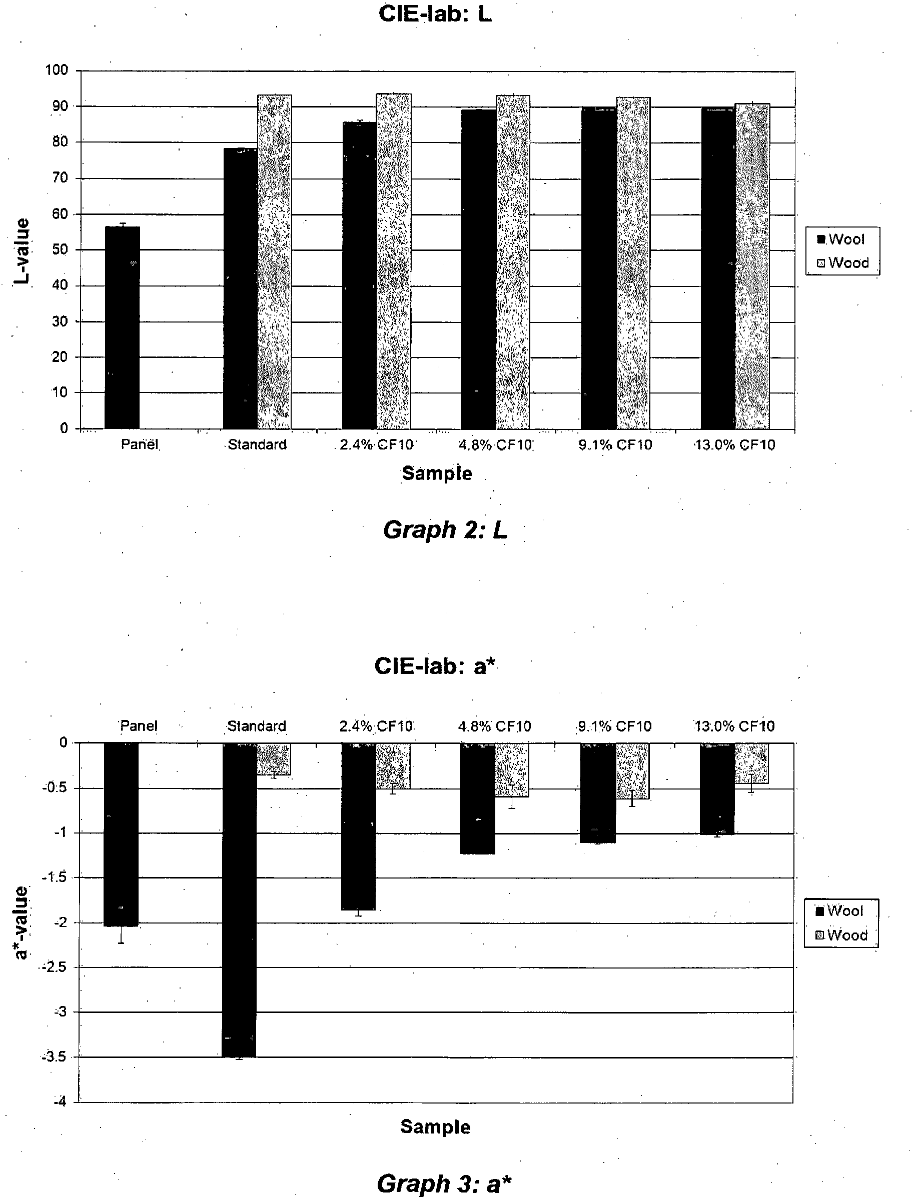

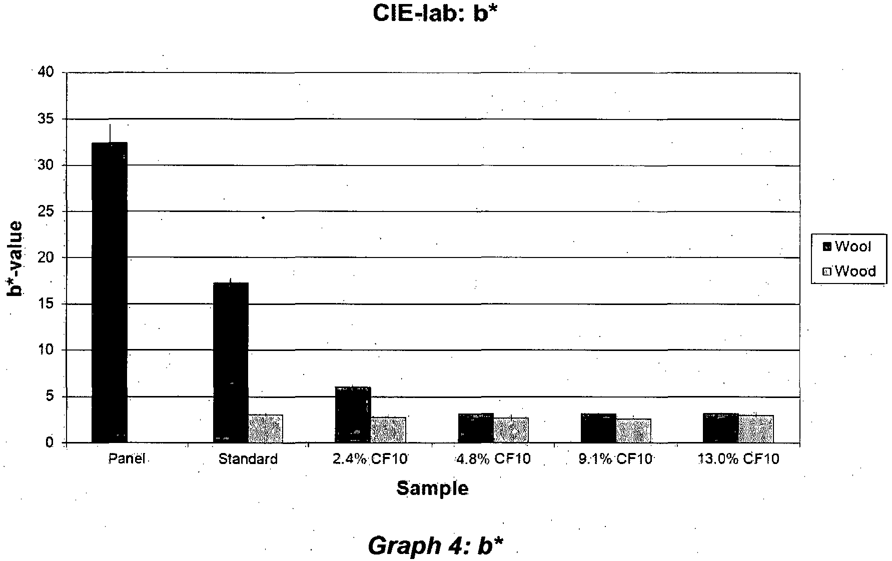

*Graph 2* shows that the presence of fibres prevents the paint from being absorbed into the wool substrate, hence making the paint as such more effective.

The most interesting aspect of all these measurements is that the presence of fibres reduces the differences in colour between the wool and the wood. It is not necessary to go to 9.1 or 13.0 % of fibres: after 4.8 % the effect of the fibres remains on a similar level.

### 1.3 Conclusions

Adding around 5 to 10 % of fibres to the formulation is a good method to avoid the wet paint being absorbed into the wool. The difference in colour between the coated wool and wood level out due to the presence of fibres in the primer, resulting in a more homogeneous appearance of the product. Furthermore, with this amount of fibres the effect on the viscosity of the paint is negligible.

## Claims

1. A mineral wool substrate comprising at least one coated surface, wherein a cured/dried composition has been applied to the at least one surface and the cured/dried composition is a cured/dried paint composition, that comprises fibres and a binder,
wherein said fibres are man-made vitreous fibres selected from the group of glass fibres, rock fibres, stone fibres, slag fibres or ceramic fibres or any combination thereof.

2. A mineral wool substrate according to claim 1, wherein said fibres are man-made vitreous fibres having oxide contents by weight in the following ranges:
SiO₂ 37 to 42%
Al₂O₃ 18 to 23%
CaO + MgO 34 to 39%
Fe₂O₃ up to 1%
Na₂O + K₂O up to 3%

3. A mineral wool substrate according to any preceding claim, wherein said fibres have a length of from 100 to 750 µm.

4. A mineral wool substrate, according to any preceding claim, wherein said fibres have an aspect ratio ranging from 20:1 to 100:1.

5. A mineral wool substrate, according to any preceding claim, wherein said fibres have an oil absorption value of from 20-65 g/100g.

6. A mineral wool substrate, according to any preceding claim, wherein said fibres are mineral fibres having less than 20% by weight of shot present in the mineral fibres, such as less than 5% by weight, such as less than 2% by weight.

7. A mineral wool substrate, according to any preceding claim, wherein said substrate has a density of from 400 to 1500 kg/m³.

8. A mineral wool substrate, according to any preceding claim, wherein said substrate is a mineral wool insulation product, preferably a thermal or acoustic insulation product.

9. A coated mineral wool substrate, according to any of claims 1 to 8, wherein said substrate is a mineral wool cladding product.

10. A mineral wool substrate, according to any preceding claim, wherein said paint composition is applied as a base coat, and optionally one or more top coats is provided over the base coat.

11. A method of coating a mineral wool substrate comprising the steps of: applying a paint composition comprising fibres that are man-made vitreous fibres selected from the group of glass fibres, rock fibres, stone fibres, slag fibres or ceramic fibres or any combination thereof, binder and a liquid vehicle to at least one surface of the mineral wool substrate; and curing/drying the paint composition.

12. A method of coating a mineral wool substrate according to claim 11, wherein the concentration of the fibres is in the range of 0.1-30 wt.%, such as 1-15 wt.% of the composition.

13. A method of coating according claim 11 or claim 12, further comprising any of the features of claims 1 to 10.

14. A composite structure comprising a plurality of wooden members having the mineral wool substrate according to any of claims 1 to 10 there between, and wherein the wooden members are preferably coated with the same cured/dried paint composition as the mineral wool substrate.

## Patentansprüche

1. Mineralwollesubstrat, das wenigstens eine beschichtete Fläche umfasst, wobei eine ausgehärtete/getrocknete Zusammensetzung auf die wenigstens eine Fläche angewandt wurde, und die ausgehärtete/getrocknete Zusammensetzung eine ausgehärtete/getrocknete Lackzusammensetzung ist, die Fasern und ein Bindemittel umfasst,
wobei die Fasern durchscheinende Kunstfasern sind, die von der Gruppe von Glasfasen, Felsfasern, Steinfasern, Schlackenfasern oder keramischen Fasern, oder einer Kombination davon gewählt werden.

2. Mineralwollesubstrat nach Anspruch 1, wobei die Fasern durchscheinende Kunstfasern sind, die einen Oxidgehalt nach Gewicht in den folgenden Bereichen haben:
SiO₂37 bis 42 %
Al₂O₃ 18 bis 23 %
CaO + MgO 34 bis 39 %
Fe₂O₃ bis zu 1 %
Na₂O + K₂O bis zu 3 %.

3. Mineralwollesubstrat nach einem vorangehenden Anspruch, wobei die Fasern eine Länge von 100 bis 750 µm haben.

4. Mineralwollesubstrat nach einem vorangehenden Anspruch, wobei die Fasern ein Seitenverhältnis von 20:1 bis 100:1 haben.

5. Mineralwollesubstrat nach einem vorangehenden Anspruch, wobei die Fasern einen Ölabsorptionswert von 20 - 65 g/100 g haben.

6. Mineralwollesubstrat nach einem vorangehenden Anspruch, wobei die Fasern Mineralfasern mit weniger als 20 % nach Gewicht von vorhandenen Granalien in den Mineralfasern haben, sowie weniger als 5 % nach Gewicht, sowie weniger als 2 % nach Gewicht.

7. Mineralwollesubstrat nach einem vorangehenden Anspruch, wobei das Substrat eine Dichte von 400 bis 1500 kg/m³ hat.

8. Mineralwollesubstrat nach einem vorangehenden Anspruch, wobei das Substrat ein Isolierungsprodukt aus Mineralwolle, und vorzugsweise ein thermisches oder akustisches Isolierungsprodukt ist.

9. Beschichtetes Mineralwollesubstrat nach einem der Ansprüche 1 bis 8, wobei das Substrat ein Plattierungsprodukt aus Mineralwolle ist.

10. Mineralwollesubstrat nach einem vorangehenden Anspruch, wobei die Lackzusammensetzung als Basisschicht aufgetragen wird, und wahlweise eine oder mehrere Oberschichten über die Basisschicht bereitgestellt werden.

11. Verfahren zum Beschichten eines Mineralwollesubstrats, das folgende Schritte umfasst: auftragen einer Lackzusammensetzung, die Fasern umfasst, die durchscheinende Kunstfasern von einer Gruppe von Glasfasern, Felsfasern, Steinfasern, Schlackenfasern oder Keramikfasern, oder einer Kombination davon auswählen, Bindemittel und ein flüssiges Mittel auf wenigstens eine Fläche des Mineralwollesubstrats auftragen, und aushärten/trocknen der Lackzusammensetzung .

12. Verfahren zum Beschichten eines Mineralwollesubstrats nach Anspruch 11, wobei die Konzentration der Fasern im Bereich von 0,1 - 30 Gewichtsprozent ist, wie ein Gewichtsprozent von 1 - 15 der Zusammensetzung.

13. Verfahren zum Beschichten nach Anspruch 11 oder Anspruch 12, das ferner eines der Merkmale der Ansprüche 1 bis 10 umfasst.

14. Zusammensetzungsstruktur, das eine Vielzahl von hölzernen Elementen umfasst, die das Mineralwollesubstrat nach einem der Ansprüche 1 bis 10 dazwischen haben, und wobei die hölzernen Elemente vorzugsweise mit derselben ausgehärteten/getrockneten Lackzusammensetzung als das Mineralwollesubstrat beschichtet ist.

## Revendications

1. Substrat de laine minérale comprenant au moins une surface revêtue, dans lequel une composition durcie/séchée a été appliquée à au moins une surface et la composition durcie/séchée est une composition de peinture durcie/séchée qui renferme des fibres et un liant,
dans lequel les fibres sont des fibres vitreuses synthétiques sélectionnées dans le groupe constitué de fibres de verre, de fibres de roche, de fibres de pierre, de fibres de scories ou de fibres de céramique ou d'une combinaison quelconque des celles-ci.

2. Substrat de laine minérale selon la revendication 1, dans lequel lesdites fibres sont des fibres vitreuses synthétiques ayant une teneur en oxyde en poids se situant dans les plages suivantes :
SiO₂ 37 jusqu'à 42 %
Al₂O₃ 18 jusqu'à 23 %
CaO+MgO 34 jusqu'à 39 %
Fe₂O₃ jusqu'à 1 %
Na₂O + K₂O jusqu'à 3 %

3. Substrat de laine minérale selon l'une quelconque des revendications précédentes, dans lequel lesdites fibres ont une longueur de 100 à 750 µm.

4. Substrat de laine minérale selon l'une quelconque des revendications précédentes, dans lequel lesdites fibres ont un rapport de dimensions situé dans la plage de 20 : 1 à 100 : 1.

5. Substrat de laine minérale selon l'une quelconque des revendications précédentes, dans lequel lesdites fibres ont une valeur d'absorption d'huile de 20 à 65 g/100 g.

6. Substrat de laine minérale selon l'une quelconque des revendications précédentes, dans lequel lesdites fibres sont des fibres minérales ayant moins de 20 % en poids de grenailles présentes dans les fibres minérales, comme moins de 5 % en poids, comme moins de 2 % en poids.

7. Substrat de laine minérale selon l'une quelconque des revendications précédentes, dans lequel ledit substrat a une densité de 400 à 1500 kg/m³.

8. Substrat de laine minérale selon l'une quelconque des revendications précédentes, dans lequel ledit substrat est un produit isolant à base de laine minérale, de préférence un produit isolant thermique ou acoustique.

9. Substrat de laine minérale revêtue, selon l'une quelconque des revendications 1 à 8, dans lequel ledit substrat est un produit de revêtement en laine minérale.

10. Substrat de laine minérale selon l'une quelconque des revendications précédentes, dans lequel ladite composition de peinture est appliquée en tant que couche de base et une ou plusieurs couches de finition sont éventuellement appliquées par-dessus la couche de base.

11. Procédé de revêtement d'un substrat de laine minérale comprenant les étapes consistant à : appliquer une composition de peinture renfermant des fibres qui sont des fibres vitreuses synthétiques sélectionnées dans le groupe constitué de fibres de verre, de fibres de roche, de fibres de pierre, de fibres de scories ou de fibres de céramique ou d'une combinaison quelconque de celles-ci, de liant et d'un véhicule liquide, sur au moins une surface du substrat de laine minérale ; et durcir/sécher la composition de peinture.

12. Procédé de revêtement d'un substrat de laine minérale selon la revendication 11, dans lequel la concentration des fibres se situe dans la plage de 0,1 à 1-30 % en poids, telle que 1 à 15 % en poids de la composition.

13. Procédé de revêtement selon la revendication 11 ou la revendication 12, comprenant en outre l'une des caractéristiques des revendications 1 à 10.

14. Structure composite comprenant une pluralité d'éléments de bois possédant entre les deux le substrat de laine minérale selon l'une quelconque des revendications 1 à 10, et dans laquelle les éléments de bois sont de préférence revêtus de la même composition de peinture durcie/séchée que le substrat de laine minérale.
